# EUROPÄISCHE PATENTANMELDUNG

(11) **EP 3 733 384 A1**
(43) Veröffentlichungstag der Anmeldung: **04.11.2020**
(21) Anmeldenummer: 20171836.8
(22) Anmeldetag: 28.04.2020
(51) Int. Cl.: B29C 65/78, B29C 65/00, B65B 51/14, B65B 51/16, B65B 11/48

(54) **VORRICHTUNG UND VERFAHREN ZUM TRANSPORTIEREN VON FERTIG ZUGESCHNITTENEN UND BEFÜLLTEN SCHLAUCHSTÜCKEN**

(30) Priorität: 02.05.2019 EP 19172261
(71) Anmelder: Teepack Spezialmaschinen GmbH & Co. KG, 40667 Meerbusch (DE)
(72) Erfinder: Lambertz, Stefan, 50354 Hürth (DE); Knops, Hans, 47839 Krefeld (DE)
(74) Vertreter: Grünecker Patent- und Rechtsanwälte PartG mbB

(57) **Zusammenfassung**

Die vorliegende Erfindung betrifft eine vereinfachte Vorrichtung und ein prozesstechnisch vereinfachtes und auch schneller durchzuführendes Verfahren zum Transportieren von fertig zugeschnittenen und befüllten Schlauchstücken innerhalb einer Maschine zum Herstellen von mit brühfähigem Material gefüllten Beuteln. Die erfindungsgemäße Vorrichtung hat ein Transportrad (100), das auf seinem Umfang verteilt mehrere jeweils einen Beutel (6) haltende Halterungen (104) aufweist, die an dem Transportrad (100) verschwenkbar gelagert sind. Bei dem erfindungsgemäßen Verfahren wird ein Schlauchstück zur Ausbildung eines Beutels mit zumindest einer Kammer zwischen einem Kopf (7) und einem Boden (9) in radialer Richtung in eine Halterung (104) des Transportrades (100) eingebracht. In einer Entnahmestation (118) wird der Beutel (6) mit dem Boden (9) nach vorne radial aus dem Transportrad (100) entnommen.

## Beschreibung

Die vorliegende Erfindung betrifft eine Vorrichtung und ein Verfahren zum Transportieren von fertig zugeschnittenen und befüllten Schlauchstücken innerhalb einer Maschine zum Herstellen von mit brühfähigem Material gefüllten Beuteln.

Eine gattungsgemäße Vorrichtung ist aus EP 2 681 119 B1 bekannt. Diese hat ein Transportrad, das auf seinem Umfang verteilt mehrere Beutel-Aufnahmen aufweist.

Bei dieser vorbekannten Vorrichtung wird das zugeschnittene und befüllte Schlauchstück zur Bildung eines Beutels aus dem Schlauchstück radial in das Transportrad eingebracht. Dabei wird das Schlauchstück so umgeformt, dass sich eine in Bezug auf das Transportrad radial erstreckende Kammer eines Beutels ergibt, wobei der Boden des Beutels radial innen und der Kopf des Beutels radial außen liegt. Diese Station wird auch im Rahmen der Beschreibung der vorliegenden Erfindung als Einbringstation bezeichnet. Dabei kann das zugeschnittene und befüllte Schlauchstück auch im Rahmen der Erfindung als Ein- oder Doppelkammerbeutel ausgebildet werden. Jedenfalls ist im Anschluss an die Einbringstation der zunächst ebene Zuschnitt so umgeformt, dass die Kammer und damit die Form des Beutels im Wesentlichen vorgegeben ist. Der Kopf liegt im Bereich des Außenumfangs des Transportrades frei. In nachfolgenden Bearbeitungsschritten und während das Transportrad dreht, wird dem Kopf des Beutels nach dem Stand der Technik ein Etikett zugeführt und mit dem Kopf des Beutels verbunden. Danach wird der Beutel in ein Längenstück einer Umhüllung eingeschlagen. Diese Umhüllung wird im Grunde U-förmig um den Beutel gelegt. Die gegeneinander liegenden Kanten der Umhüllung werden danach verschweißt, um den Beutel vollständig in der Umhüllung einzusiegeln. Die Umhüllung ist durch eine Folie gebildet, durch welche der Beutel innerhalb der Umhüllung aromadicht verpackt ist.

Beim Öffnen der so hergestellten Verpackungseinheit aus Umhüllung und Beutel wird die Umhüllung üblicherweise im Bereich einer Querschweißnaht und entlang derselben geöffnet. Dort will der Endverbraucher den Beutel über das Etikett greifen und aus der nunmehr geöffneten Umhüllung herausziehen. Dies bedingt, dass die Querschweißnaht dort die Umhüllung begrenzt, wo der Beutel mit seinem Etikett vorgesehen ist.

In dem zuvor erwähnten Stand der Technik wird hierzu der Beutel zusammen mit dem Etikett aus dem Transportrad radial ausgeschoben und ein Folienstück der Umhüllung zwischen das Transportrad und den ausgeschobenen Beutel gebracht, der danach zusammen mit der Umhüllung, die sich hierbei U-förmig um den Beutel legt, zurück in das Transportrad verbracht zu werden. In einer nachfolgenden Station erfolgt das Versiegeln der Umhüllung. Dabei wird die Umhüllung zusammen mit dem Beutel in dem Transportrad in vorbestimmter Lage gehalten. U-förmige Schweißbacken umgreifen von außen die Umhüllung und erzeugen in Einem Längsschweißnähte und die besagte Querschweißnaht, sodass der Beutel aromadicht in der Umhüllung aufgenommen ist.

Das Herausschieben des Beutels zum Einschlagen desselben in die Umhüllung ist aufwendig. Es werden erhebliche mechanische Komponenten benötigt, um diesen Prozess sicher und zuverlässig zu beherrschen. Darüber hinaus führt das Versiegeln der Umhüllung an dem Transportrad zu relativ langen Verweildauern der Beutel an dem Transportrad, da die beim Verschweißen hergestellte Schweißnaht zunächst abkühlen und hierbei durch das Transportrad gehalten werden muss, bevor die Verpackungseinheit radial aus dem Transportrad ausgeleitet werden kann.

Der vorliegenden Erfindung liegt das Problem zugrunde, eine Vorrichtung und ein Verfahren der eingangs genannten Art anzugeben, die die zuvor erwähnten Probleme ganz oder teilweise beheben.

Zur Lösung dieses Problems wird mit der vorliegenden Erfindung eine Vorrichtung mit den Merkmalen von Anspruch 1 angegeben. Bei dieser Vorrichtung ist die Halterung verschwenkbar gelagert.

Diese Ausgestaltung bietet die Möglichkeit, den Beutel in an sich bekannter Weise mit dem Boden nach vorn in dem Transportrad zu erzeugen bzw. in das Transportrad einzubringen. Dabei wird im Rahmen der Erfindung bevorzugt der Beutel als Doppelkammerbeutel hergestellt. Hierbei greifen einer Halterung zugeordnete vor- und nachlaufende Arme das zugeschnittene und befüllte Schlauchstück im Bereich seiner jeweiligen freien Enden, während der mittlere Bereich des Schlauchstücks radial in das Transportrad abgesenkt wird. Das Transportrad hat dazu bevorzugt gemäß der vorliegenden Erfindung - wie beispielsweise aus DE 38 06 386 C1 bekannt -, vor- und nachlaufende Arme zu jeder Halterung, die mit den jeweiligen Endbereichen zusammenwirken und diese beispielsweise gegen eine Abdeckung klemmen und beim Zusammenfahren der vor- und nachlaufenden Arme den Kopf des Beutels so ausbilden, dass die zunächst freien Enden gegeneinander gelegt, ggf. auch dort gefaltet werden, um den Beutel kopfseitig zu verschließen. Insofern kann das Transportrad auf bekannte Einrichtungen und Maßnahmen zurückgreifen, aus dem fertig zugeschnittenen und befüllten Schlauchstück einen oberseitig geschlossenen Beutel, insbesondere Doppelkammerbeutel auszubilden.

So kann die erfindungsgemäße Vorrichtung auch ein Profilteil aufweisen, das zwischen den jeweiligen Armen zu jeder der Halterungen vorgesehen ist und den Boden des Beutels im Bereich der Einbringstation formt und mit diesem radial nach innen in Richtung auf die Drehachse des Transportrades absenkbar ist.

Dieses Profilteil wird üblicherweise in die Halterung versenkt und kann Teil der Halterung sein. Die Halterung nach der vorliegenden Erfindung ist so ausgebildet, dass sie die Kammer des Beutels in sich aufnehmen und halten kann. Die Halterung kann in den nachfolgenden Stationen, bei welchen in an sich bekannter Weise das Etikett in Richtung auf den Kopf des zu formenden Beutels zugestellt wird, halten und positionieren.

Die Halterung der erfindungsgemäßen Vorrichtung ist diejenige Komponente, die den fertig geformten, üblicherweise bereits oberseitig geschlossenen Beutel in sich aufnimmt und diesen hält, während der so geformte Beutel in Umfangsrichtung und damit Transportrichtung des Transportrades bewegt wird. Der Halterung sind die Arme zum Formen des Beutels aus einem ebenen, fertig zugeschnittenen und brühfähigen Material gefüllten Schlauchstück zugeordnet. Diese Arme sind aber nicht Teil der Halterung. Vielmehr wird der Halterung der geformte Beutel von den Armen zugeführt.

Die verschwenkbare Halterung erlaubt es, den Beutel vor der Entnahme aus dem Transportrad zu verschwenken, sodass der Beutel mit seinem Boden radial nach außen ausgerichtet wird. In dieser Weise kann der Beutel aus dem Transportrad entnommen und beispielsweise in eine Siegelstation überführt werden, die hinsichtlich ihrer Taktung von der Drehbewegung des Transportrades entkoppelt ist, sodass die an dem Transportrad vorgenommenen Bearbeitungsschritte zur Fertigstellung des Beutels nicht durch Halte- und Kühlzeiten verlängert werden, die mit dem Verschweißen der Umhüllung und zur Herstellung der Verpackungseinheit einhergehen. Die Siegelstation kann für sich ein separates Siegeltransportrad umfassen, welches den Beutel in sich aufnimmt und beispielsweise Siegelbacken zuführt. Auf dem Weg in das Siegeltransportrad wird dabei der Beutel bevorzugt mit dem Umhüllungsmaterial verbunden, wobei das Umhüllungsmaterial mit seiner Falz, die zwei sich gegenüberliegende Schenkel der Umhüllung verbindet, dem Beutel vorlaufen kann, wobei im Rahmen der Entnahmebewegung des Beutels aus dem Transportrad der Beutel und die Umhüllung relativ zueinander bewegt werden und in ihrer finalen relativen Ausrichtung zueinander in das Siegeltransportrad gebracht und dort positioniert werden und in an sich bekannter Weise die Versiegelung erfolgt, bei welcher die Schenkel rand- und endseitig zur Herstellung einer aromadichten Verpackung um den Beutel verbunden, üblicherweise verschweißt werden. Wesentlich ist hierbei, dass die Folie den Beutel aromadicht umschließt.

Üblicherweise wird in der Einbringstation das Schlauchstück in streng radialer Richtung in die Halterung eingebracht, sodass sich die Kammer streng radial erstreckt und der Boden der Drehachse am nächsten ist, wohingegen der Kopf am weitesten von der Drehachse entfernt ist. Im Hinblick darauf wird gemäß einer bevorzugten Weiterbildung der vorliegenden Erfindung eine Entnahmestation vorgeschlagen, in der die Halterung gegenüber der Ausrichtung der Einbringstation um etwa 180° verschwenkt ist und der Beutel mit dem Boden nach vorne radial aus dem Transportrad entnommen wird. Der Entnahmestation sind üblicherweise eine Beutelhandhabungseinrichtung und eine Umhüllungsmaterialhandhabungseinrichtung zugeordnet, die einerseits den Beutel aus dem Transportrad radial entnehmen und andererseits die Umhüllung im Bereich ihrer Mitte greifen, um dort einen Falz auszubilden und diesen Falz dem Beutel vorlaufend in das Siegelhalterad einzubringen. Die Beutelhandhabungseinrichtung greift dabei den Beutel und bringt diesen in die Siegelstation ein.

Gemäß einer weiteren bevorzugten Ausgestaltung der vorliegenden Erfindung sind zwischen der Einbringstation und der Entnahmestation eine Etiketten-Zuführstation, in der dem Kopf ein Etikett zugeführt wird, und eine Verbindungsstation vorgesehen, in der ein Faden mit dem Etikett und/oder dem Beutel verbunden wird. In diesen beiden Stationen wird der Beutel mit dem Kopf radial nach außen in der Halterung gehalten, sodass das Etikett gegen den Kopf angelegt und das Etikett danach mit dem Beutel verbunden werden kann. Der Faden kann sich dabei an dem Etikett oder an dem Beutel befinden. Bevorzugt wird der Beutel zusammen mit dem Faden bereits in der Einbringstation in das Transportrad eingebracht.

Gemäß einer bevorzugten Weiterbildung der vorliegenden Erfindung ist zwischen der Einbringstation und der Entnahmestation eine Faden-Sicherungsstation vorgesehen, die der Entnahmestation in Transportrichtung des Transportrades unmittelbar vorgelagert ist. Diese Transportrichtung entspricht der Drehrichtung des Transportrades. In der Faden-Sicherungsstation wird ein mit dem Etikett bereits verbundener Faden an dem Etikett so gesichert, dass der Faden bei der weiteren Verarbeitung des Beutels in vorbestimmter Lage relativ zu dem eigentlichen Beutel und dem Etikett gesichert ist. Dazu weist das Etikett üblicherweise einen Schlitz auf, in welchen der Faden in der Faden-Sicherungsstation gedrängt wird. Das Etikett selbst kann durch geeignete Formgebung des Etiketts bzw. des Beutels formschlüssig relativ zu dem Beutel lagegesichert sein. Dabei ist der Beutel und dementsprechend die Halterung, die den Beutel in sich aufnimmt, gegenüber ihrer Lage in der Einbringstation bzw. der Entnahmestation um etwa 90 ° +/-10 ° verschwenkt. Im Gegensatz zu der Ausrichtung der Halterung in der Einbringstation bzw. der Entnahmestation orientiert sich die Lage der Halterung und damit der auf den Beutel einwirkenden Vorrichtungsteile, vorliegend derjenigen Einrichtungen zum Sichern des Fadens an dem Etikett, an der Notwendigkeit, die Halterung auf dem Weg zu der Entnahmestation bereits in Richtung auf die Ausrichtung in der Entnahmestation zu verschwenken. Dadurch kann die Entnahmestation zu der in Transportrichtung letzten Station vor der Entnahmestation angeordnet und die Vorrichtung kompakter ausgestaltet bzw. das Verfahren zum Fertigstellen des Beutels zusammen mit dem Faden und dem Etikett zu einer in der Umhüllung aufzunehmenden Verpackungseinheit rascher an dem Transportrad durchgeführt werden. Die Halterung liegt nach dieser entsprechenden Weiterbildung in der Faden-Sicherungsstation in ihrer Haupterstreckungsrichtung und damit Einbringrichtung des Beutels in etwa tangential zu der Drehachse des Transportrates.

Gemäß einer weiteren bevorzugten Ausgestaltung, die eine sichere Halterung und Verschwenkbewegung des Beutels bzw. der Halterung für den Beutel ermöglicht, hat das Transportrad zu jeder Halterung eine Bohrung, in der ein die Halterung tragender Achskörper schwenkbar gelagert ist. Durch diese Befestigung der Halterung an dem Transportrad wird die Halterung sicher mit dem Transportrad mitgeführt. Der Bohrung kann ein Lager, beispielswese ein Kugellager zugeordnet sein, welches die Schwenkbewegung des Achskörpers und damit der Halterung relativ zu dem Transportrad zuverlässig und reibungsarm führt.

Von dem Achskörper geht bei der hier diskutierten Weiterbildung zumindest ein sich quer zu der Schwenkachse des Achskörpers erstreckender Führungsarm ab. Dieser Führungsarm ist dem Achskörper fest verbunden. Das freie Ende des Führungsarmes ist in einer Kulissenführung geführt. Die Führung erfolgt mit wenig Spiel. Dazu hat der Führungsarm üblicherweise eine als Kurvenrolle bezeichnete, eine rotationssymmetrische und frei drehbare Außenumfangsfläche des freien Endes ausbildende Rolle. Diese Kurvenrolle ist in einer Führungsnut aufgenommen. Diese Führungsnut ist dabei üblicherweise umfänglich geschlossen in einer ortsfest vorgesehenen Führungsscheibe ausgebildet. So gibt der Eingriff des freien Endes des Führungsarmes in der Kulissenführung die relative winkelige Ausrichtung des Achskörpers zu dem Transportrad vor. Die Kulissenführung dient dabei der Aufprägung der Schwenkbewegung der Halterung während der Drehung des Transportrades.

Die Kulissenführung ist dementsprechend umfänglich um die Drehachse des Transportrades ausgebildet. Bei einer 360°-Drehbewegung des Transportrades wird die Halterung aufgrund der Kulissenführung in der Einbringstation so ausgerichtet, dass der dem Boden des Beutels zugeordnete Teil der Halterung radial innen liegt, wohingegen dieses Teil in der Entnahmestation radial außen liegt.

Bevorzugt hat der Achskörper zumindest zwei, besonders bevorzugt exakt zwei Führungsarme mit freien Enden, die jeweils für sich in einer Kulissenführung geführt werden. Sind mehr als ein Führungsarm vorgesehen, so ragen freien Enden derselben üblicherweise in Richtung des Achskörpers unterschiedlich weit ab, sodass ein freies Ende in einer Führungsnut geführt ist, die in Bezug auf die Schwenkachse des Achskörpers entsprechend der Drehachse des Transportrades tiefer liegt als die andere dem anderen Führungsarm zugeordnete Führungsnut. Durch Erhöhung der Anzahl der Kulissenführungen wird die Positionierung und auch die Führung der Halterung im Rahmen der Drehbewegung des Transportrades verbessert und eine Verschwenkbewegung der Halterung um mehr als 90° ermöglicht.

Für die Festlegung des Beutels in der Halterung kann eine Beutelklemme vorgesehen sein, die für das Einbringen des Beutels in und die Entnahme des Beutels aus der Halterung in eine Offenstellung verschwenkt werden kann, ansonsten aber gegen den Beutel anliegt und diesen in der Halterung festlegt. In der den Beutel festlegenden Lage kann die Beutelklemme unter Federvorspannung einer Klemmfeder gegen den Beutel anliegen. Die Beutelklemme kann beispielsweise an einer Betätigungshülse befestigt sein, die relativ zu dem Achskörper und auf diesem verschwenkbar gelagert ist. Der Betätigungshülse kann einen Betätigungsarm aufweisen, der jedenfalls im Bereich der Einbringstation und der Entnahmestation mit ortsfest in Bezug auf die Drehbewegung des Transportrades vorgesehenen Öffnerkurven zusammenwirkt, die die Betätigungshülse und damit die Beutelklemme entgegen der Kraft der Klemmfeder verschwenkt und dementsprechend die Beutelklemme für das Einbringen bzw. Entnehmen des Beutels aus der Halterung freigibt. Die Öffnerkurven wirken dabei zur Verminderung der Reibung üblicherweise mit einer an dem freien Ende des Betätigungsarms frei drehbar gelagerten Kurvenrollen zusammen. Die Öffnerkurven führen üblicherweise den Betätigungsarm bis zur Schließung der Beutelklemme, sodass die Beutelklemme geführt an den Beutel bzw. eine die Halterung begrenzende Fläche angelegt wird.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine unter zur Hilfenahme der erfindungsgemäßen Vorrichtung herstellbare Verpackungseinheit, bestehend aus einem Beutel mit Etikett und Faden und einer Umhüllung;
- Figur 2: eine Seitenansicht auf das Transportrad nach dem Ausführungsbeispiel mit verschiedenen, umfänglich um das Transportrad angeordneten Stationen;
- Figur 3: eine Seitenansicht des Transportrades nach Figur 2 ohne die Darstellung der Komponenten der einzelnen Stationen;
- Figur 4: ein Ausführungsbeispiel einer Halterung des Ausführungsbeispiels nach den Figuren 2 und 3 in einer Offenstellung;
- Figur 5: eine stirnseitige Ansicht der Komponente nach Figur 5;
- Figur 6: eine Darstellung gemäß Figur 4 in der Geschlossenstellung;
- Figur 7: eine Darstellung gemäß Figur 5 in der Geschlossenstellung.

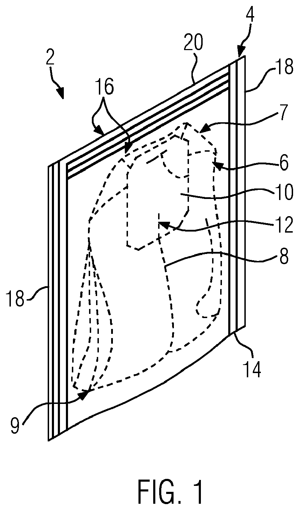

Die Figur 1 zeigt ein Ausführungsbeispiel einer mit Bezugszeichen 2 gekennzeichneten Verpackungseinheit bestehend aus einer Umhüllung 4, in der ein Beutel 6 mit einem an einem Kopf 7 des Beutels 6 befestigten Faden 8 und einem an dem Kopf 7 und damit gegenüberliegend zu einem Boden 9 des als Doppelkammerbeutel ausgebildeten Beutels 6 angeordneten Etikett 10 aufgenommen sind. Der Faden 8 ist dabei einerseits mit dem Etikett 10 verknotet und andererseits durch einen Schlitz 12 des Etiketts 10 hindurchgeführt und dementsprechend an dem Etikett 10 gesichert. Der Inhalt der Umhüllung wird auf diese Weise an dem nachfolgend beschriebenen Transportrad hergestellt.

Die Umhüllung 4 besteht aus einem Längenstück einer aromadichten Folie, die über eine Falz 14 zur Ausbildung von zwei aneinander liegenden Schenkeln 16 gefaltet und über zwei parallele Längsschweißnähte 18 und eine Querschweißnaht 20 versiegelt ist.

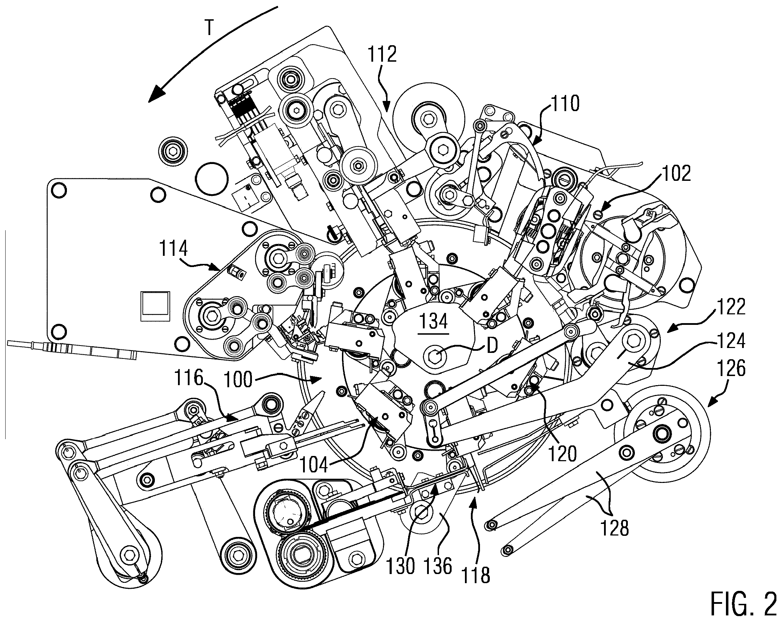

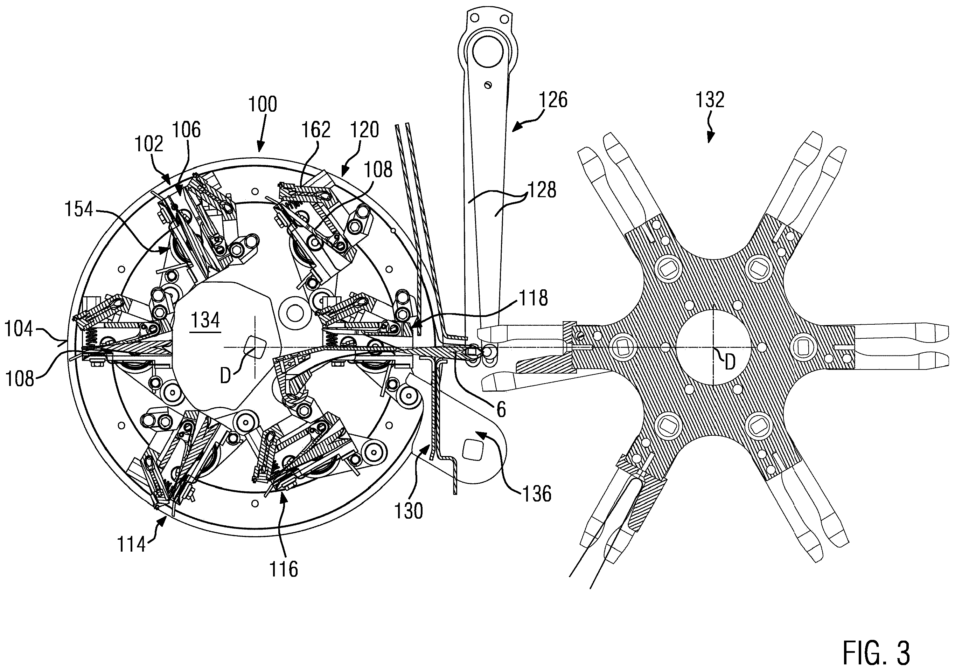

Die Fertigstellung des in der Umhüllung 4 aufgenommenen Beutels 6 zusammen mit dem Etikett 10 erfolgt an dem nachfolgend unter Bezugnahme auf die Figuren 2 ff. beschriebenem Transportrad, welches in den Figuren mit Bezugszeichen 100 gekennzeichnet ist. In den Ansichten nach den Figuren 2 und 3 dreht das Transportrad 100 gegen den Uhrzeigersinn. Diese Drehrichtung entspricht der Transportrichtung T. Umfänglich um das Transportrad 100 sind verschiedene Stationen vorgesehen, in denen auf den Beutel 6 bzw. dem Faden 8 oder das Etikett 10 eingewirkt wird. Bei Bezugszeichen 102 ist eine Einbringstation vorgesehen, in welcher der Beutel 6 zusammen mit dem daran bereits befestigten Faden 8 in das Transportrad 100 eingebracht wird. Dazu hat das Transportrad 100 eine in den Figuren 3 bis 7 detaillierte Halterung 104, die einen den Beutel 6 aufnehmenden Halteschacht 106 umfasst, dem eine Beutelklemme 108 zugeordnet ist, die den Beutel 6 in der Halterung 104 fixiert.

Wie Figur 2 verdeutlicht, ist der Halteschacht 106 in der Einbringstation 102 streng radial ausgerichtet, sodass der Beutel 6 durch radiales Einstopfen in die Halterung 104 in den Halteschacht 106 eingeschoben werden kann.

In Figur 2 ist ein bogenförmiges Einbringsegment 110 zu erkennen, welches alternierend bewegt wird, um den Beutel 6 in die jeweilige Halterung 104 einzuschieben. Dabei wird die Drehung des Transportrades 100 jeweils unterbrochen. Dementsprechend wird das Transportrad 100 im Rahmen der weiteren Bearbeitung des Beutels 6 zyklisch drehend angetrieben, wobei das Transportrad 100 während der jeweiligen Bearbeitungsschritte steht.

In Transportrichtung T der Einbringstation 102 benachbart befindet sich eine Etiketten-Zuführstation 112, in welche ein zugeschnittenes, mit einem Schlitz und Löchern für das Durchführen des Fadens 8 versehenes Etikett 10 dem Kopf 7 des Beutels 6 zugeführt wird. Die Halterung 104 hat dabei eine gegenüber der Orientierung in der Einbringstation 102 unveränderte radiale Ausrichtung. Entsprechendes gilt für eine sich in Transportrichtung T anschließende Verbindungsstation 114, in welcher bei dem Ausführungsbeispiel der Faden 8 mit dem Etikett 10 verknotet wird, wie dies grundsätzlich in EP 1 731 295 B1 beschrieben ist.

Im Anschluss an die Verbindungsstation 114 wird die Halterung 104 verschwenkt, sodass diese Halterung 104 in der mit Bezugszeichen 116 gekennzeichneten Faden-Sicherungsstation 116 um 90° verschwenkt ist und sich dementsprechend relativ zu einer Drehachse D des Transportrades 100 tangential erstreckt. In dieser Faden-Sicherungsstation 116 wird der Faden 8 in den Schlitz 12 des Etiketts 10 eingeschoben. So wird der Faden 8 dem Etikett 10 und danach dem Beutel 6 zugeordnet, um zu verhindern, dass beim nachfolgenden Umhüllen des Beutels der Faden die Versieglung der Ränder des Umhüllungsmaterials durchsetzt oder sich gar an Teilen der Vorrichtung bei der weiteren Handhabung des Beutels 4 zusammen mit dem Etikett 10 und dem Faden 8 verfängt.

Mit Bezugszeichen 118 ist eine Entnahmestation gekennzeichnet. In dieser Entnahmestation 118 ist der Beutel 6 gegenüber seiner Ausrichtung in der Einbringstation 102 um 180° gedreht. Während der Beutel 6 in der Einbringstation 102 mit seinem Boden 9 nach vorne in die Halterung 104 eingebracht wird, wird beim radialen Ausschieben des Beutels 6 in der Entnahmestation 118 der Beutel 6 mit dem Boden 9 nach vorne ausgeschoben.

Zwischen der Entnahmestation 118 und der Einbringstation 102 befindet sich in der Transportrichtung der Entnahmestation 118 nachgelagert eine Verschwenkstation 120, in welcher die Halterung 104 um 180° verschwenkt wird, sodass diese für die Aufnahme eines neuen Beutels 6 in der Einbringstation 102 angemessen ausgerichtet wird.

Wie Figur 3 erkennen lässt, wird der Beutel 6 in der Entnahmestation von einer Beutelhandhabungseinrichtung 122 in der Halterung 104 gegriffen und radial aus der Halterung 104 herausgezogen. Die Beutelhandhabungseinrichtung 122 hat dafür vorlaufende und nachlaufende Arme 124, die den Beutel im Bereich des Bodens 9 klemmen und radial aus der Halterung 104 herausziehen (vgl. Figur 2). Diesen Armen 124 vorgelagert sind in Figur 3 nicht dargestellte vorlaufende und nachlaufende Arme einer Umhüllungsmaterialhandhabungseinrichtung 126, die das tangential über eine Umhüllungsmaterialführung 130 an dem Transportrad 100 vorbeigeführte Umhüllungsmaterial zur Ausbildung der Falz 14 greifen und radial ausfördern. In Figur 3 ist neben dem Transportrad 100 ein Siegeltransportrad 132 einer Siegelstation gezeigt, welches die Umhüllung 4 zusammen mit dem Beutel 6, dem Faden 8 und dem Etikett 10 in sich aufnimmt, wobei das Material der Umhüllung 4 bereits mit der Falz 14 versehen ist und der der Falz 14 gegenüberliegende Querrand sowie die beiden Längsränder von einer Schweißeinrichtung, die in Bezug auf die Drehachse D des Siegeltransportrades 132 dem Transportrad 100 im Wesentlichen gegenüber liegt, verschweißt werden und dementsprechend der Beutel 6 zusammen mit dem Etikett 10 und dem Faden 8 aromadicht eingesiegelt wird.

Die Figuren 2 und 3 lassen radial innen eine zyklisch verschwenkte innere Öffnerkurve 134 erkennen, die die Beutelklemme 108 zum Einbringen des Beutels 6 in der Einbringstation 102 in die Offenstellung verschwenkt. An der Entnahmestation 118 ist eine ebenfalls nicht mit dem Transportrad 100 drehende äußere Öffnerkurve 136 gezeigt, die an einem verschwenkbar betätigbarem Hebel befestigt ist und die Beutelklemme 108 zum Entnehmen des Beutels in der Entnahmestation 118 von dem Beutel 6 abhebt.

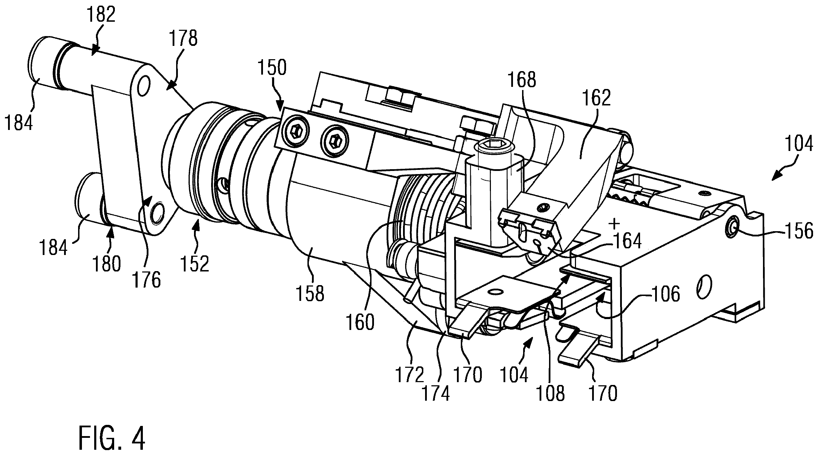

Die Figuren 4 bis 7 zeigen Details der Halterung 104.

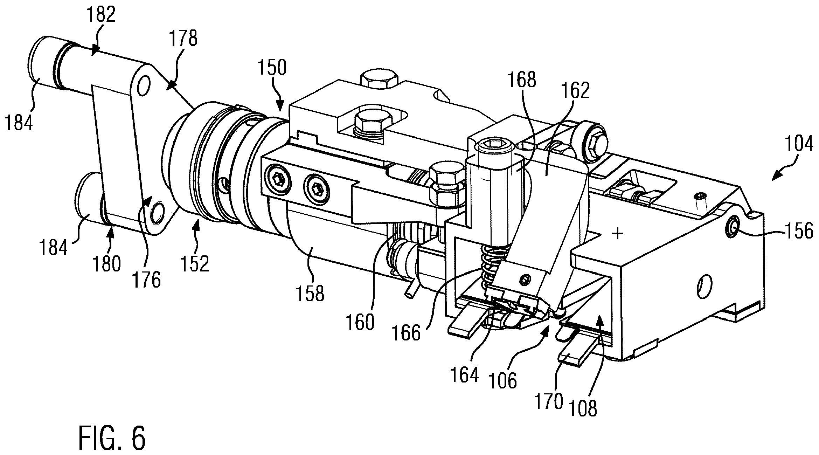

Jede Halterung 104 hat einen Achskörper 150, der über ein Kugellager 152, das in einer Bohrung 154 (vgl. Figur 3) des Transportrades 100 eingebracht und dort gelagert ist, frei drehbar an dem Transportrad 100 gehalten ist. An dem freien Ende des Achskörpers 150 befindet sich der Halteschacht 106. In diesem Halteschacht 106 ist die Beutelklemme 108 verschwenkbar gelagert. Mit Bezugszeichen 156 ist eine Schwenkachse für die Schwenkbewegung der Beutelklemme 108 gekennzeichnet. Die Beutelklemme 108 ist verdrehfest mit einer Betätigungshülse 158 verbunden, die über eine Klemmfeder 160 gegenüber dem Achskörper 150 vorgespannt gehalten ist. Verdrehfest mit der Betätigungshülse 158 ist ein Halter 162 vorgesehen, der an seinem freien Ende ein die Öffnung des Halteschachtes 106 teilweise überragendes und jedenfalls in Figur 6 teilweise verlegendes Luftknoterklötzchen 164 trägt. In der Geschlossenstellung nach Figur 6 ist eine Niederhalterfeder 166 zu erkennen, die mit dem freien Ende der Beutelklemme 108 zusammenwirkt, um diese gegen den Beutel 6 vorgespannt zu halten. In der Offenstellung gemäß Figur 4 befindet sich diese Niederhalterfeder 166 innerhalb eines Aufnahmezylinders 168. In der Offenstellung nach Figur 4 liegt die Beutelklemme 108 an der in Figur 4 oberen Wand des Halteschachtes 106 an. Gegenüberliegend dazu wird die Öffnung des Halteschachtes 106 von trichterförmig nach außen geneigten Führungsvorsprüngen 170 überragt.

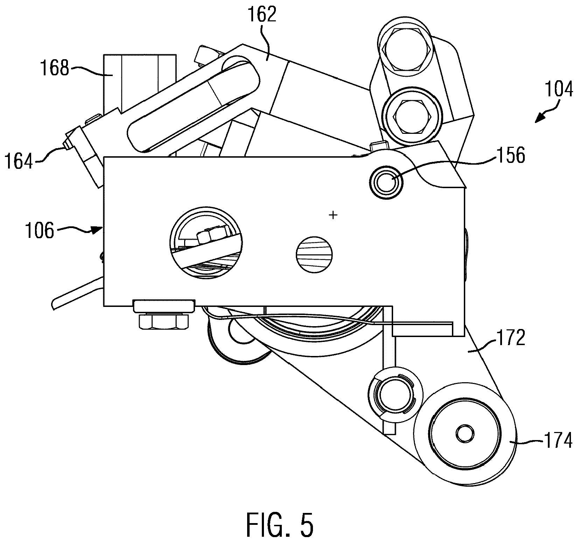

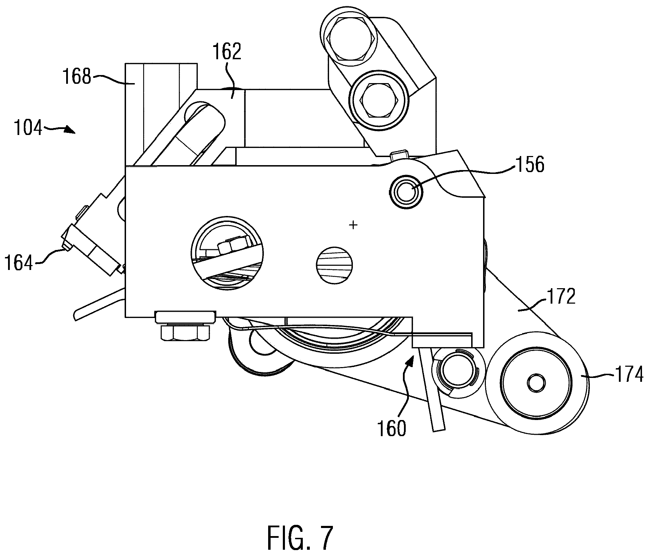

Von der Betätigungshülse 158 ragt radial ein fest mit dieser Betätigungshülse 158 verbundener Betätigungsarm 172 ab, der an seinem freien Ende mit einer Kurvenrolle 174 versehen ist. Diese Kurvenrolle 74 wirkt mit den Führungsflächen der inneren und äußeren Öffnerkurve 134, 136 zusammen. Dadurch wird die Beutelklemme entgegen der Kraft der Klemmfeder 160 und der Niederhalterfeder 166 in die Offenstellung verschwenkt. Fehlt ein Zusammenwirken von Kurvenrolle 174 und Kurvenkontur der Öffnerkurve 134 bzw. 136, verschwenkt die Beutelklemme 108 in die in Figur 6 gezeigte geschlossene Stellung. Ein Ende der Klemmfeder 160 wird an dem Betätigungsarm 172 abgestützt (vgl. Figur 5, 7).

An dem dem Halteschacht 106 gegenüberliegende Ende des Achskörpers 150 sind zwei radial in Bezug auf die Mittellängsachse des Achskörpers 150 abgehende Führungsarme 176, 178 vorgesehen, die in axialer Richtung von Führungszapfen 180, 182 überragt sind, die jeweils Kurvenrollen 184 tragen. Dabei hat der Führungszapfen 182 eine größere axiale Erstreckung als der Führungszapfen 180.

Jeder Führungszapfen 180, 182 greift in jeweils eine Führungsnut ein, die an einer in der Draufsicht nach den Figuren 2 und 3 hinter dem Transportrad 100 ortsfest vorgesehenen Führungsscheibe ausgespart sind. Die dem Führungszapfen 182 zugeordnete Führungsnut liegt dabei tiefer als die dem Führungszapfen 180 zugeordnete Führungsnut. Die Nuten kreuzen einander. Sie nehmen die Kurvenrollen 184 der beiden Führungszapfen 180, 182 mit wenig Spiel in sich auf. Wie die Kurvenrolle 174 hat auch die Kurvenrolle 184 eine frei drehbare Ringfläche, die in der jeweiligen Führungsnut geführt ist und an den Seitenwänden der Nut reibungsarm zur Anlage gebracht werden kann.

Durch die drehbare Lagerung des Achskörpers 150 über das Kugellager 152 gegenüber dem sich drehenden Transportrad 100 und den beiden exzentrisch zu der Schwenkachse der Halterung 104, die durch die Mittellängsachse der Achskörpers 150 gebildet ist, vorgesehenen Führungszapfen 180, 182 kann die Verschwenkbewegung der Halterung 104 im Rahmen der Drehbewegung des Transportrades 100 relativ zu der ortsfesten Führungsscheibe erzeugt und exakt vorgegeben werden.

Die Ausgestaltung mit zwei Führungszapfen 180, 182 erlaubt dabei eine enge und präzise Zwangsführung der Schwenkbewegung der Halterung 104. Wie die Draufsicht nach den Figuren 2 und 3 vermittelt, sind in Umfangsrichtung des Transportrades 100 insgesamt sechs Stationen vorgesehen. Die einzelnen Halterungen 104 sind dementsprechend um 60° in Umfangsrichtung versetzt zueinander vorgesehen. Dabei kann auf einem Transportweg von 120° die Halterung 104 um 180° bzw. auf einem Transportweg entsprechend 60° um exakt 90° verschwenkt werden.

Bei dem Ausführungsbeispiel induziert die Drehbewegung des Transportrades 105 zusammen mit der zyklischen Bewegung der inneren Öffnerkurve 134 das Öffnen und Schließen der Beutelklemme 108 im Bereich der Einbringstation 102. In der Entnahmestation 118 wird das Öffnen und Schließen der Beutelklemme 108 durch Verschwenken der äußeren Öffnerkurve 136 bewirkt, während das Transportrad 100 steht. Dabei wird - wie Figur 3 belegt - zwar die Beutelklemme 108 an den Beutel 6 angelegt. Der Halter 132 wird aber auf einer mittleren Position gehalten. Die Relativbewegung zwischen der Beutelklemme 108 und dem Halter 132 wird durch die Niederhalterfeder 166 bewirkt. In der Etiketten-Zuführstation 112 ist die Beutelklemme 108 an den Beutel 6 angelegt. Der Halter 162 wird indes auf einer mittleren Position gehalten, sodass das endlos zugeführte und das Etikett 10 ausbildende Material im Bereich der Etiketten-Zuführstation 112 abgeschnitten werden kann, ohne mit dem Halter 162 zu kollidieren. Die innere Öffnerkurve 134 wird bei stehendem Transportrad 100 relativ zu dem Transportrad verschwenkt. Sie wird aber auch bei drehendem Transportrad 100 entgegen seiner Drehrichtung verschwenkt.

Das in der Etiketten-Zuführstation 112 zugeführte Etikett 10 wird gegen die Außenfläche des Luftknoterklötzchens 164 angelegt, welches zusammen mit Einrichtungsteilen der Verbindungsstation 114 einen Luftkanal zur Führung des freien Endes des Fadens 8 ausbildet, um den Faden 8 mit dem Etikett 10 in EP 1 731 295 B1 beschriebenen Weise zu verknoten.

### Bezugszeichenliste

- 2: Verpackungseinheit
- 4: Umhüllung
- 6: Beutel
- 7: Kopf
- 8: Faden
- 9: Boden
- 10: Etikett
- 12: Schlitz
- 14: Falz
- 16: Schenkel
- 18: Längsschweißnaht
- 20: Querschweißnaht
- 100: Transportrad
- 102: Einbringstation
- 104: Halterung
- 106: Halteschacht
- 108: Beutelklemme
- 110: Einbringsegment
- 112: Etiketten-Zuführstation
- 114: Verbindungsstation
- 116: Faden-Sicherungsstation
- 118: Entnahmestation
- 120: Verschwenkstation
- 122: Beutelhandhabungseinrichtung
- 124: Arme
- 126: Umhüllungsmaterialhandhabungseinrichtung
- 128: Arme
- 130: Umhüllungsmaterialführung
- 132: Siegeltransportrad
- 134: Innere Öffnerkurve
- 136: Äußere Öffnerkurve
- 150: Achskörper
- 152: Kugellager
- 154: Bohrung
- 156: Schwenkachse
- 158: Betätigungshülse
- 160: Klemmfeder
- 162: Halter
- 164: Luftknoterklötzchen
- 166: Niederhalterfeder
- 168: Aufnahmezylinder
- 170: Führungsvorsprung
- 172: Betätigungsarm
- 174: Kurvenrolle
- 176: Führungsarm
- 178: Führungsarm
- 180: Führungszapfen
- 182: Führungszapfen
- 184: Kurvenrolle
- D: Drehachse
- T: Transportrichtung

## Patentansprüche

1. Vorrichtung zum Transportieren von fertig zugeschnittenen und befüllten Schlauchstücken innerhalb einer Maschine zum Herstellen von mit brühfähigem Material gefüllten Beuteln, mit einem Transportrad (100), das auf seinem Umfang verteilt mehrere jeweils den Beutel (6) haltende Halterung (104) aufweist,
**dadurch gekennzeichnet, dass**
die Halterung (104) verschwenkbar gelagert ist.

2. Vorrichtung nach Anspruch 1, **gekennzeichnet durch** eine dem Transportrad (100) zugeordnete Einbringstation (102), in der eines der Schlauchstücke in radialer Richtung zur Ausbildung eines Beutels (6) mit zumindest einer Kammer zwischen einem Kopf (7) und einem Boden (9) des Beutels (6) in die Halterung (104) eingebracht wird, und eine dem Transportrad (100) zugeordnete Entnahmestation (118), in der die Halterung (104) gegenüber der Ausrichtung in der Einbringstation (102) um etwa 180° verschwenkt ist und der Beutel (6) mit dem Boden (9) nach vorne radial aus dem Transportrad (100) entnommen wird.

3. Vorrichtung nach Anspruch 2, **dadurch gekennzeichnet, dass** zwischen der Einbringstation (102) und der Entnahmestation (118) eine Etiketten-Zuführstation (112), in der dem Kopf (7) ein Etikett (10) zugeführt wird, und eine Verbindungsstation (114), in der ein Faden (8) mit dem Etikett (10) und/oder dem Beutel (6) verbunden wird, vorgesehen sind und in denen der Beutel (6) mit dem Kopf (7) nach außen in der Halterung (104) gehalten ist.

4. Vorrichtung nach Anspruch 2 oder 3, **dadurch gekennzeichnet, dass** zwischen der Einbringstation (102) und der Entnahmestation (118) eine Faden-Sicherungsstation (116) vorgesehen ist, die in Transportrichtung des Transportrades (100) der Entnahmestation (118) unmittelbar vorgelagert ist und in der ein mit dem Etikett (10) verbundener Faden (8) in einen an dem Etikett (10) vorgesehenen Schlitz (12) gedrängt wird, während die Halterung (104) gegenüber ihrer Lage in der der Einbringstation (102) und der Entnahmestation (118) um 90° +/-10° verschwenkt ist.

5. Vorrichtung nach einem der vorherigen Ansprüche, **dadurch gekennzeichnet, dass** das Transportrad (100) zu jeder Halterung (104) eine Bohrung (154) aufweist, in der ein die Halterung (104) tragender Achskörper (150) verschwenkbar gelagert ist, der mit zumindest einem quer zu einer Schwenkachse des Achskörpers (150) abgehenden Führungsarm (178) verbunden ist, dessen freies Ende zur Aufprägung der Schwenkbewegung der Halterung (104) während der Drehung des Transportrades (100) in einer umfänglich die Drehachse (D) des Transportrades (100) umgebenden Führung geführt ist.

6. Verfahren zum Transportieren von fertig zugeschnittenen und befüllten Schlauchstücken innerhalb einer Maschine zum Herstellen von mit brühfähigem Material gefüllten Beuteln (6) mit einem Transportrad (100), bei dem eines der Schlauchstücke in eine Einbringstation (102) zur Ausbildung eines Beutels (6) mit zumindest einer Kammer zwischen einem Kopf (7) und einem Boden (9) des Beutels (6) in radialer Richtung in eine Halterung (104) des Transportrades (100) eingebracht wird und der Beutel (6) in einer Entnahmestation (118) mit dem Boden (9) nach vorne radial aus dem Transportrad (100) entnommen wird.

7. Verfahren nach Anspruch 6, **dadurch gekennzeichnet, dass** der Beutel (6) von einer vorletzten Station (114) vor der Entnahmestation (118) in die letzte Station (116) vor der Entnahmestation um 90° +/-10° verschwenkt wird.

8. Verfahren nach Anspruch 6 oder 7, **dadurch gekennzeichnet, dass** eine den Beutel (6) haltende und an dem Transportrad (100) befestigte Halterung (104) zur Aufprägung einer Schwenkbewegung der Halterung (104) während der Drehung des Transportrades (100) zwangsgeführt wird.
